(19) Europäisches Patentamt / European Patent Office / Office européen des brevets

(11) **EP 3 520 025 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **17794221.6**

(22) Anmeldetag: **28.09.2017**

(51) Internationale Patentklassifikation (IPC):
**G06V 20/58** (2022.01)

(52) Gemeinsame Patentklassifikation (CPC):
**G06V 20/58**

(86) Internationale Anmeldenummer:
**PCT/DE2017/200103**

(87) Internationale Veröffentlichungsnummer:
**WO 2018/059632 (05.04.2018 Gazette 2018/14)**

(54) **DETEKTION UND VALIDIERUNG VON OBJEKTEN AUS SEQUENTIELLEN BILDERN EINER KAMERA MITTELS HOMOGRAPHIEN**

DETECTION AND VALIDATION OF OBJECTS FROM SEQUENTIAL IMAGES OF A CAMERA USING HOMOGRAPIES

DÉTECTION ET VALIDATION D'OBJETS PROVENANT D'IMAGES SÉQUENTIELLES D'UNE CAMÉRA EN UTILSANT DES HOMOGRAPHIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2016 DE 102016218849**

(43) Veröffentlichungstag der Anmeldung:
**07.08.2019 Patentblatt 2019/32**

(73) Patentinhaber: **Continental Autonomous Mobility Germany GmbH**
**85057 Ingolstadt (DE)**

(72) Erfinder: **WALTER, Michael**
**9435 Heerbrugg (CH)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
EP-A1- 2 993 654     US-A1- 2014 161 323
US-A1- 2015 086 080     US-A1- 2015 332 114

- **JOHANN PRANKL ET AL: "Interactive object modelling based on piecewise planar surface patches", COMPUTER VISION AND IMAGE UNDERSTANDING, vol. 117, no. 6, 1 June 2013 (2013-06-01), pages 718 - 731, XP055162053, ISSN: 1077-3142, DOI: 10.1016/j.cviu.2013.01.010**
- **PENG CHANG ET AL: "Stereo-based vision system for automotive imminent collision detection", INTELLIGENT VEHICLES SYMPOSIUM, 2004 IEEE PARMA, ITALY JUNE 14-17, 2004, PISCATAWAY, NJ, USA,IEEE, 14 June 2004 (2004-06-14), pages 274 - 279, XP010727481, ISBN: 978-0-7803-8310-4, DOI: 10.1109/IVS.2004.1336394**
- **PRATEEK SINGHAL ET AL: "Top Down Approach to Detect Multiple Planes from Pair of Images", PROCEEDINGS OF THE 2014 INDIAN CONFERENCE ON COMPUTER VISION GRAPHICS AND IMAGE PROCESSING, ICVGIP '14, 1 January 2014 (2014-01-01), New York, New York, USA, pages 1 - 8, XP055439700, ISBN: 978-1-4503-3061-9, DOI: 10.1145/2683483.2683536**

## Beschreibung

Die Erfindung betrifft ein Verfahren zur Erkennung von Objekten aus Bildern einer Kamera und zum Tracken (Nachverfolgen) derselben und kann insbesondere bei kamerabasierten Fahrerassistenzsystemen verwendet werden.

Fahrzeugerkennungssysteme nach dem aktuellen Stand der Technik sind meist klassifikationsbasiert. Klassifikationsbasierte Systeme können Fahrzeuge bzw. Fahrzeugkomponenten wiedererkennen, die sie in ihren Trainingsdaten gesehen haben. Neue Fahrzeugdesigns, sowie sich verändernde Aufbauten können jedoch zu einer stark reduzierten System Performance führen und fordern generische Ansätze zur Objekterkennung.

US 2014/0161323 A1 zeigt ein Verfahren zur Erzeugung dichter dreidimensionaler Strukturen in einer Straßenumgebung aus Bildern, die mit einer Monokamera aufgenommen werden.

EP 2 993 654 A1 zeigt ein Verfahren zur Frontkollisionswarnung (FCW) aus Kamerabildern. Hierbei wird ein Bildausschnitt analysiert, wohin das eigene Fahrzeug in einem vorgegebenen Zeitintervall gelangen wird. Sofern dort ein Objekt erkannt wird, wird eine Kollisionswarnung ausgegeben.

P. Chang et al. zeigen in "Stereo-Based Vision System for Automotive Imminent Collision Detection", Intelligent Vehicles Symposium, 2004 IEEE Parma, Italy June 14-17, Piscataway NJ, USA, IEEE, S. 274-279, DOI: 10.1109/IVS.2004.1226394 ein Verfahren zur Erkennung einer drohenden Kollision basierend auf Bilddaten einer Stereokamera. Anhand einer Bildsegmentierung anhand der Tiefenbilder kann ein Kollisionsobjekt detektiert und dessen Geschwindigkeit ermittelt werden.

P. Singhal et al. zeigen in "Top Down Approach to Detect Multiple Planes in Images", Proceedings of the 2014 Indian Conference on Computer Vision Graphics and Image Processing, ICVGIP '14, S. 1-8, New York, New York, USA, DOI: 10.1145/2683483.2683536 ein Verfahren zur Erkennung mehrerer Ebenen in Bildern im Rahmen einer 3D-Rekonstruktion.

US 2015/086080 A1 zeigt ein Fahrerassistenzsystem mit einer Kamera und einer Erkennung einer vertikalen Abweichung in der Fahrbahnkontur während der Fahrt. Erste, zweite und dritte Bilder der Fahrbahn werden mit der Kamera erfasst. Indem Bildpunkte der Fahrbahn im ersten Bild mit korrespondierenden Bildpunkten der Fahrbahn im zweiten Bild gematcht werden, wird eine erste Homographie berechnet, die das erste Bild der Fahrbahn in das zweite Bild umwandelt. Eine zweite Homographie wird berechnet, die das zweite Bild der Fahrbahn in das dritte Bild der Fahrbahn umwandelt. Eine verkettete Homographie wird berechnet durch eine Verkettung von erster und zweiter Homographie. Die verkettete Homographie wird als Initialschätzung verwendet, um eine dritte Homographie zu berechnen, die das erste Bild der Fahrbahn in das dritte Bild der Fahrbahn umwandelt.

J. Prankl et al. zeigen in "Interactive object modelling based on piecewise planar surface patches", Computer Vision and Image Understanding, Bd. 117, Nr. 6, 2013, S. 718-731, DOI: 10.1016/j.cviu.2013.01.010 eine interaktive Objektmodellierung basierend auf stückwise ebenen Oberflächen-Patches. Mehrere Ebenen werden in Bildfolgen detektiert, indem Hypothesen für Ebenen anhand getrackter Bildpunkte gebildet werden. Die Validität der Hypothesen wird überprüft. Es wird ein zweistufiger Ansatz vorgeschlagen, bei dem im ersten Schritt eine affine Homographie mit fünf Parameter als Eingangsüberprüfung berechnet wird. Nur, falls diese Überprüfung erfolgreich ist, wird die volle Homographie mittels dem Direct Linear Transform nach Hartley berechnet. Ebene Patches werden getrackt und aus den Ebenen werden Objekte modelliert.

Es ist eine Aufgabe der vorliegenden Erfindung, ein Verfahren zur Erkennung von Objekten anzugeben.

Ein Ausgangspunkt der Erfindung sind die folgenden Überlegungen: Sind die Kamerapositionen zweier Frames (Einzelbilder) bekannt, lassen sich Punkt-Korrespondenzen (korrespondierende Merkmalspunkte) triangulieren, aber es werden keine Objekte generiert, da die Triangulation über kein Modelwissen verfügt, das eine Punktewolke in sinnvolle Objekten clustern könnte. Nachteile monokularer Systeme sind, dass Objekte nahe dem Epipol nur ungenau trianguliert werden können und sich dort kleinste Fehler in der Egomotion (Kamera-Eigenbewegung) bemerkbar machen. Als Epipol bezeichnet man den Bildpunkt in einem ersten Kamerabild, an dem das Zentrum der Kamera zu einem zweiten Zeitpunkt abgebildet wird. Während einer Geradeausfahrt entspricht z.B. der Fluchtpunkt dem Epipol. Dies ist jedoch der relevante Bereich, um Kollisionen mit stehenden bzw. vorrausfahrenden Fahrzeugen zu erkennen. Dynamische Objekte können trianguliert werden, wenn sie sich gemäß der Epipolar-Geometrie bewegen. Sie werden jedoch aufgrund der nicht bekannten Relativgeschwindigkeit zu nah oder zu weit entfernt geschätzt.

Werden anstelle einzelner Korrespondenzen, mehrere benachbarte Korrespondenzen (korrespondierende Merkmale) betrachtet und einer aus einer Mehrzahl von Ebenen im Raum zugeordnet, lassen sich Objekte aufgrund unterschiedlicher Geschwindigkeiten, Skalierungen und Deformation segmentieren.

Ein erfindungsgemäßes Verfahren zur Detektion von Objekten aus einer Folge von Bildern einer Fahrzeugkamera ist Gegenstand des Anspruchs 1. Das Verfahren umfasst die Schritte:

a) Aufnahme einer Folge von Bildern mittels einer monokularen Fahrzeugkamera,
b1) Bestimmung von korrespondierenden Merkmalen in mindestens zwei aufeinander folgenden Bildern der Bilderfolge,

b2) Ermittlung von Ebenen im Raum, wobei die Ebenen anhand einer Zuordnung von benachbarten, korrespondierenden Merkmalen zu jeweils einer Ebene mit einer der folgenden vorgegebenen Orientierungen erfolgt: einer Rückwandebene normal zur Fahrzeuglängsrichtung, einer Seitenwandebene normal zur lateralen Richtung oder einer Bodenebene normal zur vertikalen Richtung,

c) Berechnung von Homographien für benachbarte korrespondierende Merkmale zur Bestimmung der Mehrzahl von Ebenen und zur Zuordnung der benachbarten, korrespondierenden Merkmale zu der Mehrzahl von Ebenen,

d) Ermittlung einer Bewegung der ermittelten Ebenen im Raum, wobei $t/d = ( t_x, t_y, t_z )$ als Bewegungsmaß für die zugeordneten Ebenen ermittelt wird, wobei $t$ die Translation der Fahrzeugkamera und d die Entfernung zu dieser Ebene (senkrecht zu dieser Ebene) beschreibt, und

e) Erkennung dynamischer Objekte anhand der ermittelten Bewegung mindestens einer Ebene, die einem Objekt zugeordnet werden kann.

Bevorzugt ist die Fahrzeugkamera zur Aufnahme einer Umgebung eines Fahrzeugs ausgebildet. Bei der Umgebung handelt es sich insbesondere um die vor dem Fahrzeug liegende Umgebung. Vorzugsweise ist die Fahrzeugkamera in eine Fahrerassistenzvorrichtung integrierbar oder mit dieser verbindbar, wobei die Fahrerassistenzvorrichtung insbesondere zur Objekterkennung aus den von der Fahrzeugkameravorrichtung bereitgestellten Bilddaten ausgebildet ist. Bevorzugt ist die Fahrzeugkameravorrichtung eine im Innenraum des Kraftfahrzeugs hinter der Windschutzscheibe anzuordnende und in Fahrtrichtung gerichtete Kamera. Erfindungsgemäß ist die Fahrzeugkamera eine monokulare Kamera.

Bevorzugt werden mit der Fahrzeugkamera zu bestimmten bzw. bekannten Zeitpunkten Einzelbilder aufgenommen, woraus sich eine Folge von Bildern ergibt.

Als Korrespondenz wird die Entsprechung eines Merkmals in einem ersten Bild zu demselben Merkmal in einem zweiten Bild bezeichnet. Korrespondierende Merkmale in zwei Bildern können auch als Flussvektor beschrieben werden, der angibt wie sich das Merkmal im Bild verschoben hat. Ein Merkmal kann insbesondere ein Bildausschnitt (bzw. Patch), ein Pixel, eine Kante oder eine Ecke sein.

Schritt b) kann alternativ wie folgt beschrieben werden: Ermittlung der Bewegung von mehreren Ebenen, in denen jeweils eine Vielzahl von benachbarten korrespondierenden Merkmalen liegt bzw. zu liegen kommt.

Unter Schritt b) wird auch subsummiert, dass eine Mehrzahl von Ebenen im Raum vorgegeben wird, und eine Zuordnung von benachbarten korrespondierenden Merkmalen zu jeweils einer der vorgegebenen Eben vorgenommen wird und dann die Bewegung diese Ebene ermittelt wird (vgl. unten Schritt d)).

Anhand der Bewegung einer Ebene, die einem Objekt zugeordnet werden kann, können somit in Schritt e) dynamische Objekte von statischen Objekten unterschieden werden.

Der Begriff "Ebene" beschreibt im Kontext der vorliegenden Erfindung folgende Zusammenhänge: einerseits ein Kriterium zur Akkumulation benachbarter korrespondierender Merkmale. D.h. diese werden als zusammengehörig angesehen, wenn sie in einer gemeinsamen Ebene im Raum liegen und sich entsprechend der Bewegung der Ebene zeitlich entwickeln.

Derart akkumulierte korrespondierende Merkmale werden anschließend als z.B. "Bodenebene" bezeichnet, da sie alle in der Ebene, die der Fahrbahnebene entspricht liegen. Jedoch erstreckt sich eine solche Bodenebene nicht ins Unendliche, sondern meint einen Teilbereich der Ebene, nämlich den, in dem tatsächlich korrespondierende Merkmale angeordnet sind.

Die derart bestimmten mehreren Ebenen können bei der Detektion von Objekten berücksichtigt werden. Dies kann beispielsweise in der Art geschehen, dass aus einer erkannten Bodenebene eine Fahrbahnhypothese abgeleitet wird, und dass aus einer Rückwandebene bzw. einer Seitenwandebene eine Objekthypothese für ein erhabenes Objekt generiert wird. Bereits aus einer Fahrbahnhypothese und Objekthypothese(n) für erhabene Objekte kann eine Freiraumdetektion erfolgen, die angibt, welcher Freiraum in der Umgebung des Fahrzeugs aktuell befahrbar ist. Eine vorteilhafte Anwendung der Freiraumdetektion liegt z.B. in einer Fahrbahnrandermittlung, die nicht von der Erkennung von Fahrspurmarkierungen abhängig ist.

Mit der Formulierung "Detektion von Objekte" kann also beispielsweise eine Generierung von Objekthypothesen bzw. Objekten gemeint sein.

Eine Homographie beschreibt die Korrespondenz von Punkten auf einer Ebene zwischen zwei Kamerapositionen bzw. die Korrespondenz zweier Punkte in zwei aufeinanderfolgenden Bildern der Fahrzeugkamera. Durch die Berechnung von Homographien für benachbarte korrespondierende Merkmale kann so die Zuordnung von benachbarten korrespondierenden Merkmalen zu jeweils einer Ebene im Raum erfolgen (s. Schritt b)).

Vorteilhaft können die korrespondierenden Merkmale anhand der berechneten Homographien in unterschiedliche Segmente eingeteilt werden, wobei ein Segment jeweils einer Ebene im Raum entspricht.

Schließlich kann dann eine Detektion von Objekte unter Berücksichtigung der segmentierten Merkmale erfolgen.

Im Falle eines Koordinatensystems, bei dem die x-Richtung horizontal bzw. lateral, die y-Richtung vertikal und die z-Richtung in Fahrzeuglängsrichtung verläuft, kann eine Bodenebene normal zur y-Richtung, eine Rückwandebene normal zur z-Richtung und eine Seitenwandebene normal zur x-Richtung vorgegeben werden.

Durch eine Berechnung von Homographien einer Bodenebene, einer Rückwandebene und einer Seitenwandebene kann für benachbarte korrespondierende Merkmale bzw. für jedes korrespondierende Merkmal eine Zuordnung zu einer dieser Ebenen erfolgen.

Bevorzugt können die Homographien für die Rückwandebene nach Gleichung (10) bzw. für die Bodenebene nach Gleichung (9) bzw. für die Seitenwandebene nach Gleichung (11) berechnet werden. Hierbei sind a, b, c Konstanten, $x_0$, $y_0$, $x_1$, $y_1$ bezeichnen Korrespondenzen im ersten Bild (Index 0), aufgenommen zu einem Zeitpunkt t-0, und zweiten Bild (Index 1), aufgenommen zu einem früheren Zeitpunkt t-1, und $t_x$, $t_y$, $t_z$ sind die Komponenten des Vektors $t$/d. $t$ beschreibt die Translation der Fahrzeugkamera und d die Entfernung zu einer Ebene (senkrecht zu dieser Ebene), also entlang des Normalenvektors dieser Ebene. Die Komponenten $t_x$, $t_y$ bzw. $t_z$ werden im Folgenden auch als "inverse TTC" bezeichnet. TTC kommt von ‚Time to collision' und ergibt sich in einer Raumrichtung als Abstand geteilt durch Translationsgeschwindigkeit.

Bevorzugt können, falls mehrere Ebenen mit identischer Orientierung auftreten, die Ebenen mit identischer Orientierung anhand der zugehörigen $t_x$, $t_y$, $t_z$ -Werte getrennt werden. Beispielsweise können zwei Rückwandebenen, die in z-Richtung unterschiedlich weit von der Fahrzeugkamera entfernt sind, über unterschiedliche $t_z$-Werte voneinander unterschieden werden.

Gemäß einer vorteilhaften Weiterbildung kann eine Eigenrotation der Fahrzeugkamera zwischen mindestens zwei aufeinander folgenden Bildern ermittelt werden die Ermittlung eines oder mehrerer Ebenen(-bereiche) im Bild, die keine absolute Translationsbewegung aufweisen. Sehr weit bzw. unendlich weit entfernte Objekte weisen keine (berechenbare) Translationsbewegung auf ($t_x = t_y = t_z \approx 0$). Die Bewegung dieser Ebenen im Bild ist daher nur durch die Kameraeigenrotation bedingt. Im Umkehrschluss kann daher die Kameraeigenrotation aus der Ermittlung der Bewegung entsprechender korrespondierender Merkmale bzw. Ebenen rekonstruiert werden.

Bevorzugt können die Bildkoordinaten des Epipols $x_{e,t0}$ zum Zeitpunkt t durch die Homographie statischer Ebenen $H_{st}$ der Bildkoordinaten des Epipols $x_{e,t1}$ zum Zeitpunkt t-1 prädiziert werden: $x_{e,t0} = H_{st} * x_{e,t1}$

Gemäß einer bevorzugten Ausgestaltung kann die Pitchrate der Kamera bestimmt wird als *atan* (($x_{e0}$ - $x_{e1}$)/*f*) mit der auf einen Pixel bezogenen Brennweite f.

Alternativ oder kumulativ kann vorteilhaft die Gierrate der Kamera bestimmt wird als *atan* (($y_{e0}$ - $y_{e1}$)/*f*) mit der auf einen Pixel bezogenen Brennweite f.

Vorzugsweise kann die Eigenrotation der Fahrzeugkamera aus Daten des Fahrzeugsensorclusters bestimmt bzw. abgeleitet werden. Insbesondere die Rollbewegung kann aus diesen Daten, die über den CAN-Bus des Fahrzeugs der Fahrzeugkamera bereitstellbar sind, ermittelt werden.

Bevorzugt können nach einer Kompensation der Eigenrotation der Fahrzeugkamera überholende Fahrzeuge aufgrund der negativen $t_z$ Komponente der Bewegung der entsprechenden Ebene erkannt werden.

Vorteilhaft können nach einer Kompensation der Eigenrotation der Fahrzeugkamera näherkommende Objekte anhand der positiven $t_z$ Komponente der Bewegung der entsprechenden Ebene als potentielle Kollisionsobjekte erkannt werden.

Gemäß einer vorteilhaften Weiterbildung können nach einer Kompensation der Eigenrotation der Fahrzeugkamera in einer Kurve fahrende Fahrzeuge durch eine laterale $t_x$ Komponente der Bewegung der entsprechenden Ebene ungleich null erkannt werden.

Vorzugsweise können absolute Geschwindigkeiten von Objekten aus der inversen TTC / den Komponenten $t_x$, $t_y$, $t_z$ der Bewegung der entsprechenden Ebenen bestimmt werden, falls bei einer Fahrzeugstereokamera eine Disparitätskarte vorhanden ist. Falls die Fahrzeugkamera selbst als Stereokamera ausgebildet ist, kann durch eine dem Fachmann geläufige Auswertung eine zeitgleich aufgenommenen Bildpaares der beiden Kameramodule eine Disparitätskarte generiert werden. Damit ist die Entfernung zu einem Objekt für einen Pixel eines Kameramoduls bekannt. Dies ist auch möglich, wenn eine Disparitätskarte anhand einer zusätzlichen Stereokamera bzw. sonstigen 3D-Kamera im Fahrzeug verfügbar ist, und die Fahrzeugkamera als Monokamera ausgebildet ist.

Vorteilhaft kann, wenn für jede Ebene eine Homographie mit allen Freiheitsgraden berechnet wird, diese auch zur Rekonstruktion der 3D-Umgebung, insbesondere nahe dem Epipol, verwendet werden, indem anstelle der gemessenen Position $x_{t0}$ die prädizierte Position $H * x_{t1}$ zur Triangulation verwendet wird.

Gemäß einer bevorzugten Ausführungsform kann ein Objekt, das sich einmal als bewegtes Objekt "geoutet" hat (bei dem eine Bewegung der entsprechenden Ebene festgestellt wurde), in der Folge getrackt werden, mit dem Label bzw. der Zusatzinfo "ist ein bewegliches Objekt".

Vorteilhaft kann ein geometrisches Tracking eines beweglichen Objekts durchgeführt werden, d.h. die Annahme einer festen Breite, Höhe und/oder Länge des Objekts getroffen werden. Über die Homographie und bisherige Bewegung einer Ebene kann die Bewegung in folgenden Bildern hervorragend prädiziert werden und ein dichtes optisches Flussfeld generiert werden.

Bevorzugt kann ein Bild durch ein Gitter in gleichartige Zellen unterteilt werden, und für jede Zelle kann aus den darin ermittelten korrespondierenden Merkmalen eine Homographie berechnet werden. Zellen mit übereinstimmender Homographie können anschließend geclustert werden.

Bevorzugt kann, falls die berechnete Homographie einer ersten Zelle nicht hinreichend mit einer Homographie einer benachbarten Zelle übereinstimmt, zur Ermittlung einer Ebenengrenze vorteilhaft ein sogenannter Rückprojektionsfehler einzelner korrespondierender Merkmale betrachtet werden. Korrespondierende Merkmale können durch den Rückprojektionsfehler bewertet werden. Der Rückprojektionsfehler gibt den Unterschied an zwischen dem gemessenen Fluss und dem aus der berechneten Homographie prädizierten Fluss an. Mit anderen Worten bezeichnet der Rückprojektionsfehler einer Ebene die Differenz zwischen einem Punkt x zum Zeitpunkt t-0 und dem gemäß der Homographie dieser Ebene abgebildeten korrespondierenden Punktes zum vorangegangenen Zeitpunkt t-1 beschrieben wird (siehe unten: Gleichung 4).

Wird der Rückprojektionsfehler eines korrespondierenden Merkmals in einer ersten Zelle mit den Rückprojektionsfehlern der Homographien der benachbarten Zellen verglichen und dieses korrespondierende Merkmal der Homographie mit dem geringstem Fehler zugewiesen werden, kann die Ebenengrenze (bzw. Segmentgrenze bzw. Clustergrenze) innerhalb der ersten Zelle verfeinert werden. Auf diese Weise können verschiedene korrespondierende Merkmale einer Zelle unterschiedlichen Ebenen zugeordnet werden.

Bevorzugt kann die Zuordnung von Ebenen zu benachbarten korrespondierenden Merkmalen im Wesentlichen im gesamten Bild der Fahrzeugkamera (z.B. in mindestens 80% der Bildfläche, bevorzugt mindestens 90%) ermittelt werden. Da das erfindungsgemäße Verfahren sehr schnell ausgestaltet werden kann, ist eine generische Objektdetektion bzw Szeneninternretation für nahezu das gesamte Bild in Echtzeit möglich.

Gegenstand der Erfindung ist weiterhin eine Vorrichtung zur Detektion von Objekten aus einer Folge von Bildern einer monokularen Fahrzeugkamera ist Gegenstand des Anspruchs 15. Die Vorrichtung umfasst ein Kamerasteuergerät und eine Auswerteelektronik,

wobei das Kamerasteuergerät dazu konfiguriert bzw. ausgebildet ist,

a) eine Folge von Bildern mit der Fahrzeugkamera aufzunehmen; und wobei die Auswerteelektronik dazu konfiguriert/ausgebildet ist,

b) eine Bewegung von Ebenen im Raum zu ermitteln, wobei die Ebenen jeweils einer Bodenebene, einer Rückwandebene oder einer Seitenwandebene entsprechen und die Ebenen anhand einer Zuordnung von benachbarten korrespondierenden Merkmalen in mindestens zwei aufeinander folgenden Bildern ermittelt werden,

d) als Bewegungsmaß $t/d = ( t_x, t_y, t_z )$ für die zugeordnete Ebene zu ermitteln, wobei $t$ die Translation der Fahrzeugkamera und d die Entfernung zu dieser Ebene beschreibt, und

e) dynamische Objekte anhand der ermittelten Bewegung einer Ebene zu erkennen, die einem Objekt zugeordnet werden kann.

Die genannten Mittel können insbesondere ein Kamerasteuergerät, einen Digital Signal Processor (DSP), einen Mikrocontroller oder

- prozessor, einen ASIC (Application Specific Integrated Circuit), einen FPGA (Field Programmable Gate Array) und dergleichen mehr sowie Software zur Durchführung der entsprechenden Verarbeitungsschritte umfassen.

Die vorliegende Erfindung kann somit in digitalen elektronischen Schaltkreisen, Computer-Hardware, Firmware oder Software implementiert sein.

Weitere Merkmale, Vorteile und Wirkungen der Erfindung ergeben sich aus der nachfolgenden Beschreibung bevorzugter Ausführungsbeispiele der Erfindung. Dabei zeigen:

Fig. 1 schematisch eine typische Deformation einer sich nähernden Rückwandebene;

Fig. 2 schematisch eine typische Deformation einer sich nähernden Bodenebene;

Fig. 3 schematisch eine typische Deformation a) einer sich schnell und b) einer sich langsam nähernden oder weiter entfernten Rückwandebene;

Fig. 4 schematisch eine Unterteilung eines Bildes mit zwei unterschiedlichen Segmenten in Zellen;

Fig. 5 Segmentierungsergebnisse nach einem dritten Iterationsschritt;

Fig. 6 Ebenen-Orientation zur Target Validierung (Validierung potentieller Kollisionsobekte);

Fig. 7    Time to Collision-Betrachtung; und

Fig. 8    Projektion (bzw. Warpen) des Leitplankensegments zum Zeitpunkt t-0 (rechts) auf t-1 (links).

Einander entsprechende Teile sind in der Regel in allen Figuren mit denselben Bezugszeichen versehen.

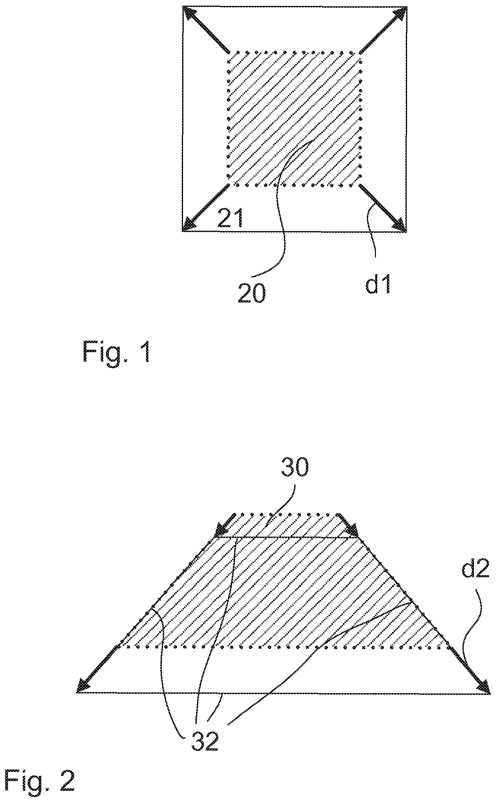

In Fig. 1 ist schematisch eine Rückwandebene (back plane) dargestellt, die zu einem ersten Zeitpunkt t-1 den schraffiert dargestellten Bereich (20, gepunktete Linie) einnimmt. Zu einem darauf folgenden Zeitpunkt t hat sich der Abstand zwischen der Fahrzeugkamera und der Rückwandebene verringert, was zu der durch die Pfeile (d1) angedeuteten Deformation des Bereichs (21, durchgezogene Linie) der Rückwandebene im Bild führt. Der Bereich (20; 21) skaliert bzw. vergrößert sich infolge der Relativbewegung von der Fahrzeugkamera zu der Rückwandebene.

In Fig. 2 ist schematisch eine Bodenebene (ground plane) dargestellt, die zu einem ersten Zeitpunkt t-1 den schraffiert dargestellten Bereich (30, gepunktete Linie) einnimmt. Dies könnte ein Abschnitt einer Fahrbahnoberfläche sein, auf der das Fahrzeug fährt. Infolge der Eigenbewegung der Fahrzeugkamera ändert sich der Bereich (im Bild) zu einem darauf folgenden Zeitpunkt t, was zu der durch die Pfeile (d2) skizzierten Deformation des Bereichs (32) der Bodenebene führt. Zum Zeitpunkt t begrenzen die mit 32 bezeichneten Linien den Bereich der Bodenebene. Unter der "Bodenebene" wird hier also ein abgegrenzter Bereich auf der Fahrbahnoberfläche verstanden. Der Randbereich ergibt sich z.B. aus Signaturen (bzw. Randpunkten) auf der Fahrbahnoberfläche, die in der Bilderfolge getrackt werden können.

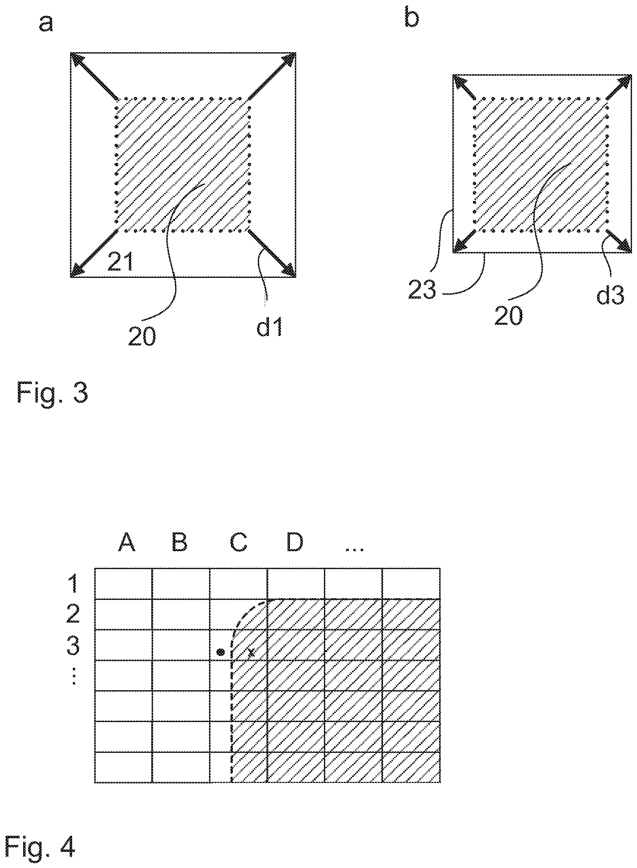

Fig. 3 veranschaulicht den Unterschied zwischen einer sich schnell (Fig. 3a: 20, 21; Deformation d1) und einer sich langsam (Fig. 3b) nähernden Rückwandebene (20, 23; Deformation d3), falls zum Zeitpunkt t-1 die Rückwandebene (20) in Fig. 3a denselben Abstand zur Fahrzeugkamera aufweist wie die Rückwandebene (20) in Fig. 3b.

Alternativ könnte Fig. 3 den Unterschied zwischen einer nahen Rückwandebene (Fig. 3a: 20, 21; Deformation d1) und einer weiter entfernten Rückwandebene (20, 23; Deformation d3) darstellen, die sich z.B. mit derselben (Relativ-) Geschwindigkeit bewegen, dann wäre das in Fig. 3b dargestellte Objekt (20, 21) im realen Raum größer als das in Fig. 3a dargestellte Objekt (20, 23).

Werden anstelle einzelner Korrespondenzen, mehrere benachbarte Korrespondenzen betrachtet, lassen sich Objekte aufgrund unterschiedlicher Geschwindigkeiten, Skalierungen und Deformation segmentieren.

Geht man davon aus, dass die Welt aus Ebenen besteht, kann man diese durch Homographien beschreiben und wie im Folgenden gezeigt wird über Ihre Distanz, Geschwindigkeit und Orientierung trennen.

Eine Homographie beschreibt die Korrespondenz von Punkten auf einer Ebene zwischen zwei Kamerapositionen bzw. die Korrespondenz zweier Punkte in zwei aufeinanderfolgenden Frames:

$$x_{t0} = H * x_{t1} \text{ mit } x_{t0} = \begin{bmatrix} x_0 \\ y_0 \\ 1 \end{bmatrix}, \quad x_{t1} = \begin{bmatrix} x_1 \\ y_1 \\ 1 \end{bmatrix}. \qquad (1)$$

Hierbei beschreibt der Vektor $x_{t0}$ die 3D-Korrespondenz zum Zeitpunkt t-0 des Vektors $x_{t1}$ zum Zeitpunkt t-1. Eine Homographie kann bildbasiert durch Kenntnis von vier Punkt-Korrespondenzen berechnet werden (vgl. Tutorial: Multiple View Geometry, Hartley, R. and Zisserman, A., CVPR June 1999: https://de.scribd.com/document/96810936/Hartley-Tut-4up abgerufen am 26.09.2016) . Die auf Seite 6 des Tutorials links oben (Folie 21) angegebenen Zusammenhänge lassen sich in der Notation von Gleichung 1 wie folgt formulieren:

$$\begin{bmatrix} -x_0 & -y_0 & -1 & 0 & 0 & 0 & x_1 x_0 & x_1 y_0 & x_1 \\ 0 & 0 & 0 & -x_0 & -y_0 & -1 & y_1 x_0 & y_1 y_0 & y_1 \\ & & & & \vdots & & & & \end{bmatrix} * \begin{bmatrix} h_1 \\ h_2 \\ h_3 \\ h_4 \\ h_5 \\ h_6 \\ h_7 \\ h_8 \\ h_9 \end{bmatrix} = 0 \qquad (2)$$

mit

$$H = \begin{bmatrix} h_1 & h_2 & h_3 \\ h_4 & h_5 & h_6 \\ h_7 & h_8 & h_9 \end{bmatrix}.$$

Alternativ kann bei Kenntnis der Kameratranslation *t*, der Rotation R und der Entfernung d entlang des Normalenvektors n der Ebene die Homographie nach Gleichung 3 berechnet werden. Gleichung 3 verdeutlicht, dass sich bei einer inversen TTC *t/d* ungleich Null, Ebenen mit unterschiedlichen Orientierung n modellieren lassen und dass sich Ebnen mit identischer Orientierung *n* über ihre inverse TTC trennen lassen.

$$H = \left[ R - \frac{t * n\prime}{d} \right] \qquad (3)$$

Eine Homographie lässt sich theoretisch in den Normalen Vektor *n*, die Rotationsmatrix R und die inverse TTC *t/d* zerlegen. Leider ist diese Zerlegung numerisch äußerst instabil und empfindlich auf Messfehler.

Beschreibt man eine Szene durch Ebenen, lässt sie sich wie im Folgenden angegeben segmentieren.

Fig. 4 zeigt schematisch eine Unterteilung in Zellen (Grid, Gitter/-linien) . Die Szene wird in NxM initiale Zellen unterteilt und jeder Punkt-Korrespondenz wird eine eindeutige ID zugewiesen. Diese ID gibt zunächst die Zugehörigkeit zu einer Zelle an. Im weiteren Verlauf kann die ID die Zugehörigkeit zu einem Cluster oder einem Objekt angeben.

Schraffiert ist ein Objekt (insb. eine Rückwandebene) im Vordergrund dargestellt. Der Hintergrund ist weiß dargestellt. Beinhaltet eine Zelle nur ein Objekt (Zellen B3, D3) wird eine Homographie diese Zelle sehr gut beschreiben. Beinhaltet eine Zelle jedoch mehr als ein Objekt (Zelle C3), wird die Homographie keines der beiden Objekte gut beschreiben. Werden die Punkt-Korrespondenzen (schwarzer Punkt bzw. schwarzes Kreuz bzw. x) den Clustern (bzw. Segment) der benachbarten Zellen (B3 bzw. D3) über Ihre Rückprojektionsfehler zugeordnet, wird der schwarze Punkt dem Segment der Zelle B3 und das schwarze Kreuz dem Segment der Zelle D3 zugeordnet, da die Homographie für die Zelle C3 weder den Vordergrund noch den Hintergrund gut beschreibt.

Ist Vorwissen über eine Szene vorhanden, lassen sich die Segmentgrößen an die Szene anpassen, indem z.B. größere Bereiche im Nahbereich des Fahrzeuges oder in Bereichen mit positiver Klassifikations-Antwort generiert werden. Für jedes Segment wird, wie in den Gleichungen 5 bis 10 gezeigt wird, eine dedizierte Back-/Ground- und Side-Plane-Homographie berechnet.

Die Berechnung der Back-/Ground- und Side-Plane-Homographie, erhöht die Trennschärfe, da eine Homographie mit weniger Freiheitsgraden Bereiche, die unterschiedliche Ebenen beinhalten, nur schlecht modellieren kann und somit korrespondierende Punkte einen höheren Rückprojektionsfehler aufweisen werden, siehe Fig. 4. Der Rückprojektionsfehler $e_i$ ist also ein Maß dafür, wie gut ein Punkt x zum Zeitpunkt t-0 durch die Homographie einer Ebene i des korrespondierenden Punktes zum Zeitpunkt t-1 beschrieben wird:

$$e_i = x_{t0} - H_i x_{t1} \, . \qquad (4)$$

Setzt man die statische Einbaulage der Kamera und Kamera Rotation in zwei unterschiedlichen Ansichten als gegeben voraus (z.B. durch Kenntnis der Kamera Kalibration und durch die Berechnung der Fundamental-Matrix in einem monokularen System oder durch Rotationswerte eines Drehratensensor-Clusters), lässt die inverse TTC *t/d* mittels der um die statische Kamera-Rotation kompensierten Flussvektoren berechnen, wie im Folgenden exemplarisch für eine Ground Plane *n' = [0 1 0]* gezeigt wird. Ist die Rotation nicht bekannt, kann sie näherungsweise durch eine Einheitsmatrix ersetzt werden.

Ersetzt man den Quotienten *t/d* in Gleichung 3 durch die inverse Time to Collision $\begin{bmatrix} t_x \\ t_y \\ t_z \end{bmatrix}$ folgt:

$$\begin{bmatrix} x_0 \\ y_0 \\ 1 \end{bmatrix} = \left[ R - \begin{matrix} 0 & t_x & 0 \\ 0 & t_y & 0 \\ 0 & t_z & 0 \end{matrix} \right] \begin{bmatrix} x_1 \\ y_1 \\ 1 \end{bmatrix} \Rightarrow \begin{bmatrix} x_0 \\ y_0 \\ 1 \end{bmatrix} - R \begin{bmatrix} x_1 \\ y_1 \\ 1 \end{bmatrix} = - \begin{bmatrix} 0 & t_x & 0 \\ 0 & t_y & 0 \\ 0 & t_z & 0 \end{bmatrix} \begin{bmatrix} x_1 \\ y_1 \\ 1 \end{bmatrix}. \qquad (5)$$

Durch Einführung der Konstanten a, b, c, wobei $\begin{bmatrix} a \\ b \\ c \end{bmatrix} := R \begin{bmatrix} x_1 \\ y_1 \\ 1 \end{bmatrix}$ ist, ergibt Gleichung 5 die vereinfachte Form:

$$\begin{bmatrix} x_0 \\ y_0 \\ 1 \end{bmatrix} - \begin{bmatrix} a \\ b \\ c \end{bmatrix} = - \begin{bmatrix} t_x y_1 \\ t_y y_1 \\ t_z y_1 \end{bmatrix} \Rightarrow \begin{bmatrix} x_0 \\ y_0 \\ 1 \end{bmatrix} = \begin{bmatrix} a \\ b \\ c \end{bmatrix} - \begin{bmatrix} t_x y_1 \\ t_y y_1 \\ t_z y_1 \end{bmatrix}. \qquad (6)$$

Durch Normierung der homogenen Koordinaten ergibt sich:

$$x_0(c - t_z y_1) = a - t_x y_1 \qquad (7)$$

$$y_0(c - t_z y_1) = b - t_y y_1 \qquad (8)$$

Für mehr als eine Messung ergibt sich ein Gleichungssystem der Form *Mx = v* mit einem zu bestimmenden Vektor x, einer Matrix *M* und einem Vektor *v* (siehe Gleichung 9), das sich für mindestens drei Bild-Korrespondenzen als Stützstellen durch z.B. eine Singular Value Decomposition (Singulärwertzerlegung der Matrix) oder ein Least-Square-Verfahren lösen lässt:

$$\begin{bmatrix} x_0 c - a \\ y_0 c - b \\ \vdots \end{bmatrix} = \begin{bmatrix} -y_1 & 0 & y_1 x_0 \\ 0 & -y_1 & y_1 y_0 \\ & \vdots & \end{bmatrix} * \begin{bmatrix} t_x \\ t_y \\ t_z \end{bmatrix}. \qquad (9)$$

Die Herleitung der Back- und Side-Plane-Homographien erfolgt analog und ergibt:

$$\begin{bmatrix} x_0 c - a \\ y_0 c - b \\ \vdots \end{bmatrix} = \begin{bmatrix} -x_1 & 0 & x_1 x_0 \\ 0 & -x_1 & x_1 y_0 \\ & \vdots & \end{bmatrix} \begin{bmatrix} t_x \\ t_y \\ t_z \end{bmatrix} \qquad (10)$$

*bzw.*

$$\begin{bmatrix} x_0 c - a \\ y_0 c - b \\ \vdots \end{bmatrix} = \begin{bmatrix} -1 & 0 & x_0 \\ 0 & -1 & y_0 \\ & \vdots & \end{bmatrix} \begin{bmatrix} t_x \\ t_y \\ t_z \end{bmatrix}. \qquad (11)$$

Um größere, aus mehreren Zellen bestehende Objekte zu segmentieren, lassen sich in einem weiteren Schritt benachbarte Zellen zusammenfassen, indem die Rückprojektionsfehler $\sum x_{t0}^i - H_j x_{t1}^i$ bzw. $\sum x_{t0}^j - H_i x_{t1}^j$ über Stützstellen (siehe unten Punkt 1.: RANSAC) der benachbarten Segmente *j* und *i* und deren Homographien berechnet werden. Zwei benachbarte Cluster werden zusammengefasst, falls $\sum x_{t0}^i - H_j x_{t1}^i$ kleiner $\sum x_{t0}^i - H_i x_{t1}^i$ ist oder z.B. der auf die prädizierte Flusslänge normierte Rückprojektionsfehler unter einer einstellbaren Schwelle liegt. Insbesondere können zwei benachbarte Cluster zusammengefasst werden, falls $\sum x_{t0}^i - H_j x_{t1}^i$ kleiner $\sum x_{t0}^i - H_i x_{t1}^i$ ist und die beiden Rückprojektionsfehler $\sum x_{t0}^i - H_j x_{t1}^i$ und $\sum x_{t0}^i - H_i x_{t1}^i$ eine auf die Flusslänge normierte Schwelle unterschreiten. Alternativ lassen sich Rückprojektionsfehler als Potentiale in einem Graph verwenden und eine globale Lösung berechnen. Die Kompaktheit der Cluster lässt sich hierbei über die Kantenpotentiale im Graphen bestimmen.

Wurden die Segmente zusammengefasst, werden die Homographien neu berechnet und die Punkt-Korrespondenzen den Clustern mit geringstem Rückprojektionsfehler zugeordnet. Betrachtet man nur direkt angrenzende Cluster, lassen sich sehr kompakte Objekte generieren. Überschreitet der minimale Fehler eine einstellbare Schwelle, werden den Korrespondenzen neue (Cluster-/Objekt-) IDs zugewiesen, um teilverdeckte Objekte oder Objekte mit leicht unterschiedlicher TTC erkennen zu können. Durch die Einstellung der Schwelle kann die Auflösung (leicht) unterschiedlicher Objekte angepasst werden.

Die Rückprojektionsfehler lassen sich mit einem Bias versehen, der Kosten für zusammenhängende Bereiche reduziert oder einem Bias, der die Kosten für einen ID-Wechsel erhöht, falls Punkt-Korrespondenzen über eine längere Zeit dieselbe ID-Zugehörigkeit hatten.

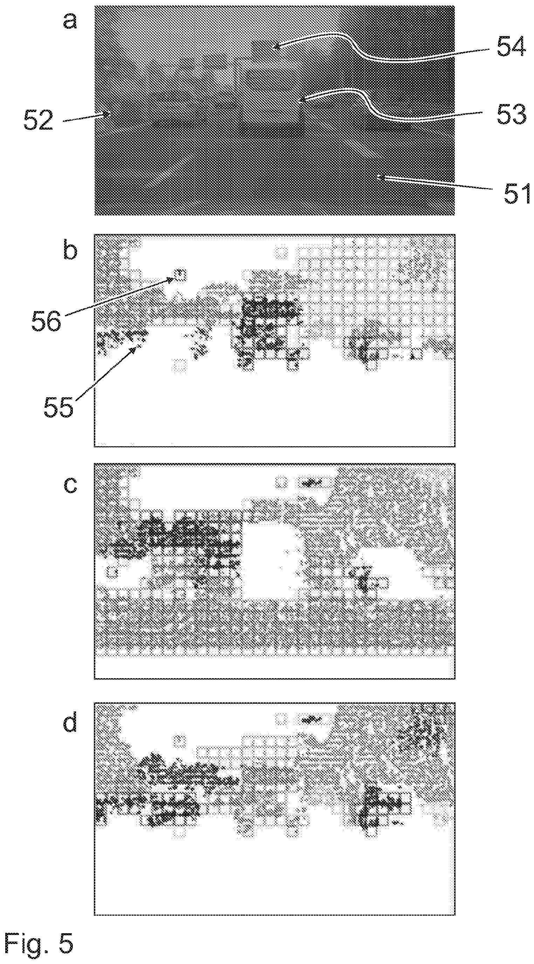

Fig. 5 zeigt ein Beispiel einer Szenensegmentierung:

Fig. 5a zeigt ein Bild, das von einer Fahrzeugkamera aufgenommen wurde, die im Inneren des Fahrzeugs angeordnet ist und die vorausliegende Umgebung durch die Windschutzscheibe erfasst. Zu sehen ist eine dreispurige Fahrbahn (51), z.B. eine Autobahn. Die Fahrspuren sind durch entsprechende Fahrspurmarkierungen getrennt. Auf allen drei Fahrspuren fahren Fahrzeuge. Das auf der eigenen Fahrspur vorausfahrende Fahrzeug (53) verdeckt möglicherweise weitere auf der eigenen Fahrspur befindliche vorausfahrende Fahrzeuge. Links der dreispurigen Fahrbahn befindet sich eine bauliche erhabene Begrenzung (52) zur Gegenfahrbahn.

Rechts der dreispurigen Fahrbahn (51) befindet sich ein Rand- bzw. Standstreifen, der nach rechts von einer Leitplanke begrenzt wird, hinter der sich ein Waldgebiet anschließt. In einiger Entfernung vor dem eigenen Fahrzeug sind Schilderbrücken (54) zu erkennen, von denen eine die dreispurige Fahrbahn (51) überspannt.

Analog dem anhand von Fig. 4 beschriebenen Verfahren, kann diese Szene segmentiert werden. In Fig. 5b bis 5d sind Zellen (56) zu erkennen. In den Zellen sind Punktkorrespondenzen (55) dargestellt. Die Zuordnung einer Zelle (56) zu einem Segment ist über die Farbe des Zellrahmens bzw. der Punktkorrespondenzen (55) dargestellt.

Fig. 5b zeigt den roten Kanal des segmentierten Bildes, Fig. 5c den grünen Kanal und Fig. 5d den blauen Kanal.

Unterschiedliche Segmente wurden mit unterschiedlichen Farben versehen. Ein Segment, welches im Original grün ist, erstreckt sich über die untersten fünf bis sechs Zeilen (in Fig. 5b und 5d entsprechend weiss dargestellt und ohne Zellrahmen). Dieses Segment entspricht der Bodenebene, also der Oberfläche der Fahrbahn (51), auf der das eigene Auto fährt.

Ein weiteres Segment ist in der Mitte des Bildes zu erkennen, im Original ist es pink. Daher weist es in Fig. 5b hohe Rotwerte auf, in Fig. 5d schwächere Blauwerte und in Fig. 5c keine Grünwerte. Dieses Segment entspricht der Rückwandebene des auf der eigenen Fahrspur vorausfahrenden (Transporter-) Fahrzeugs (53).

Das gezeigte Segmentierungsergebnis wurde ohne Vorwissen über die Szene in nur drei Iterationsschritten ermittelt. Das zeigt die enorme Schnelligkeit und Leistungsfähigkeit einer Ausführungsform der Erfindung durch zeitliche Integration.

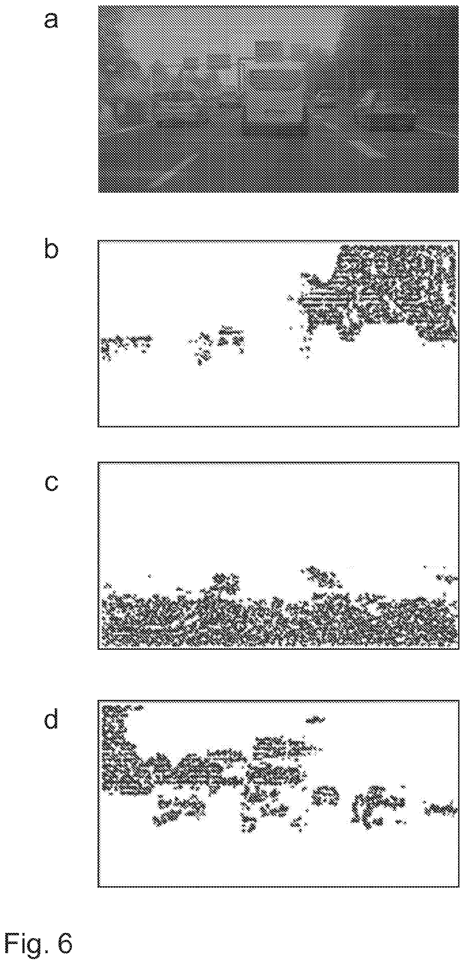

Fig. 6 zeigt eine Ermittlung der Orientierung von Ebenen in der bereits bei Fig. 5 beschriebenen Szene. Fig. 6a zeigt zur Orientierung nochmals die Umgebungssituation gemäß Fig. 5a.

Sämtliche Korrespondenzen, die einer Seitenwandebene zugeordnet zeigt Fig. 6b. Die Korrespondenzen am linken Rand wurden einer rechten Seitenwandebene zugeordnet, was zutreffend ist, da dort im Bild die rechte Seite der baulichen Begrenzung (52) zur Gegenfahrbahn befindlich ist. Die Korrespondenzen in der rechten Bildhälfte wurden linken Seitenwandebenen zugeordnet, was ebenfalls zutreffend ist, da dort die "linke Seite" der Fahrbahnrandbebauung bzw. -bepflanzung im Bild befindlich ist. Fig. 6c zeigt, welche Korrespondenzen einer Bodenebene zugeordnet werden, was zutreffend ist, da dort im Bild die Oberfläche der Fahrbahn (51) zu sehen ist.

Fig. 6d zeigt, welche Korrespondenzen einer Rückwandebene zugeordnet werden. Das ist weitestgehend zutreffend. Aus dieser Ermittlung alleine können unterschiedliche Rückwandebenen noch nicht hinreichend unterschieden werden, z.B. die von dem auf derselben Fahrspur vorausfahrenden Lieferwagen (53) von den im Bild darüber angeordneten Schildern der Schilderbrücke (54). Dieser Darstellung können aber bereits wichtige Hinweise entnommen werden, wo erhabene Objekte in der Umgebung des Fahrzeugs auftreten.

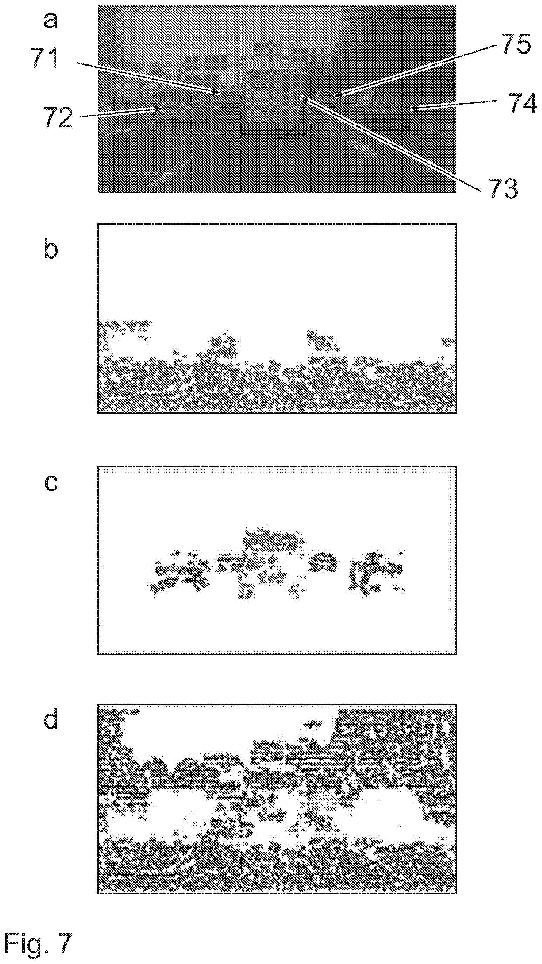

Wie in Fig. 7 veranschaulicht wird, kann zur Erkennung dynamischer Objekte die inverse TTC ($t_x$, $t_y$, $t_z$) verwendet werden. Fig. 7a zeigt wiederum das Bild der Fahrzeugsituation (identisch mit Fig. 6a). Das auf der eigenen Fahrspur vorausfahrende Fahrzeug (73) ist ein Lieferwagen. Auf der linken Spur fahren zwei Fahrzeuge (71 und 72) und auf der rechten Spur zwei weitere Fahrzeuge (74 und 75).

Fig. 7b zeigt Korrespondenzen, die wiederum der Bodenebene entsprechen (im Original violett) und als einzige einen Rotanteil aufweisen.

Fig. 7c zeigt Korrespondenzen, die bewegten Objekten zugeordnet werden. Diese sind im Original grün, wenn sie sich vom eigenen Fahrzeug entfernen (also schneller fahren) bzw. türkis, wenn sie langsamer fahren.

Fig. 7d zeigt Korrespondenzen mit Blauanteil, also solche, die der Bodenebene entsprechen (vgl. Fig. 7b), bewegte Objekte, die sich dem eigenen Fahrzeug nähern (vgl. Fig. 7c) und solche, die statischen erhabenen Objekten entsprechen, diese sind nur in Fig. 7d dargestellt, wie z.B. Waldbereiche links und rechts der Autobahn und die Schilderbrücken. Aus Fig. 7c und 7d gemeinsam, ist zu erkennen, dass sich das Fahrzeug auf der eigenen Fahrspur (73) nähert. Dasselbe gilt für das vordere Fahrzeug auf der rechten Fahrspur (75). Dagegen entfernen sich die übrigen Fahrzeuge (71, 72 und 74).

Der Bereich, der im Bild dem Himmel entspricht, führt mangels Struktur im Bild zu keinen Korrespondenzen (weiß in Fig. 7b bis 7d).

Wird die Eigenrotation in den Korrespondenzen vor der Berechnung der Homographie berücksichtigt, bzw. wird die Eigenrotation in der Rotationsmatrix $R$ berücksichtigt, lassen sich überholende Fahrzeuge aufgrund Ihrer negativen $t_z$ Komponente erkennen bzw. ausscherende oder in einer Kurve fahrende Fahrzeuge durch eine laterale $t_x$ Komponente ungleich Null erkennen. Werden die dynamischen Segmente über ihre Homographien prädiziert (siehe unten "Verdichtung des optischen Flusses basierend auf Homographien "), kann über die Zeit eine dynamische Karte aufgebaut werden.

Betrachtet man Gleichung 3, erkennt man, dass Segmente mit einer inversen TTC gleich Null die Rotationsmatrix beschreiben und man kann sie durch Berechnung einer Homographie mit vollen Freiheitsgrad (Gleichung 2) aus Segmenten mit $t/d$ gleich Null bestimmen. Geht man davon aus, dass sich die translatorische Komponenten in der Nähe des Epipols nicht bemerkbar machen, kann man die Pitch- und Gierrate auch bestimmen, indem die Koordinaten des Epipols ($x_e$, $y_e$) durch die Homographie statischer Segmente prädiziert werden und der atan $((x_{e0} - x_{e1})/f)$ bzw. atan $((y_{e0} - y_{e1})/f)$ mit der auf einen Pixel bezogenen Brennweite $f$ berechnet wird.

Wird für jedes Cluster eine Homographie mit allen Freiheitsgraden berechnet, können diese auch zur Rekonstruktion der 3D-Umgebung verwendet werden, indem anstelle der gemessenen Position $x_{t0}$, die prädizierte Position $H^*x_{t1}$ zur Triangulation verwendet wird. Dies reduziert nicht nur den Einfluss von Messfehlern, sondern ermöglicht es auch Objekte nahe des Epipols zu rekonstruieren.

Im Folgenden wird ein Ausführungsbeispiel zur Verdichtung des optischen Flusses basierend auf Homographien beschrieben.

Ist die Segmentierung zum Zeitpunkt $t-1$ bekannt, kann sie sowohl zur Prädiktion der Objekte als auch zur Generierung eines dichten Flussfeldes verwendet werden. Signaturbasierte Flussverfahren erzeugen Signaturen und versuchen diese in aufeinanderfolgenden Frames eindeutig zuzuordnen. Meist werden die Signaturen aus einem Patch (Bildausschnitt bzw. Bildbereich) definierter Größe berechnet. Verändern sich jedoch Größe und Form eines Patches, ist eine Korrespondenzfindung mit einem festen Template (Vorlage, Muster, gemeint ist z.B. ein Bildausschnitt eines Bildes der Bildfolge, der einem Objekt entspricht - beispielsweise ein Fahrzeug-Template) nicht mehr möglich. Wenn man sich z.B. einer Back-Plane annähert, verändert sich die Größe eines Patches. Oder wenn man sich über einer Ground-Plane oder parallel zu einer Side-Plane bewegt, Verändern sich sowohl Größe als auch Form eines Patches, siehe Fig. 1 und 2). Ist die Segmentierung zum Zeitpunkt $t-1$ vorhanden, können die Homographien über bereits gefunden Flussvektoren neu berechnet und dazu verwendet werden die Position und Form bereits etablierter Korrespondenzen von $t-1$ auf $t-0$ zu prädizieren.

Alternativ lässt sich der aktuelle Frame zum Zeitpunkt $t-0$ auf den Zeitpunkt $t-1$ transformieren, um Skalen- und Formänderungen zu kompensieren.

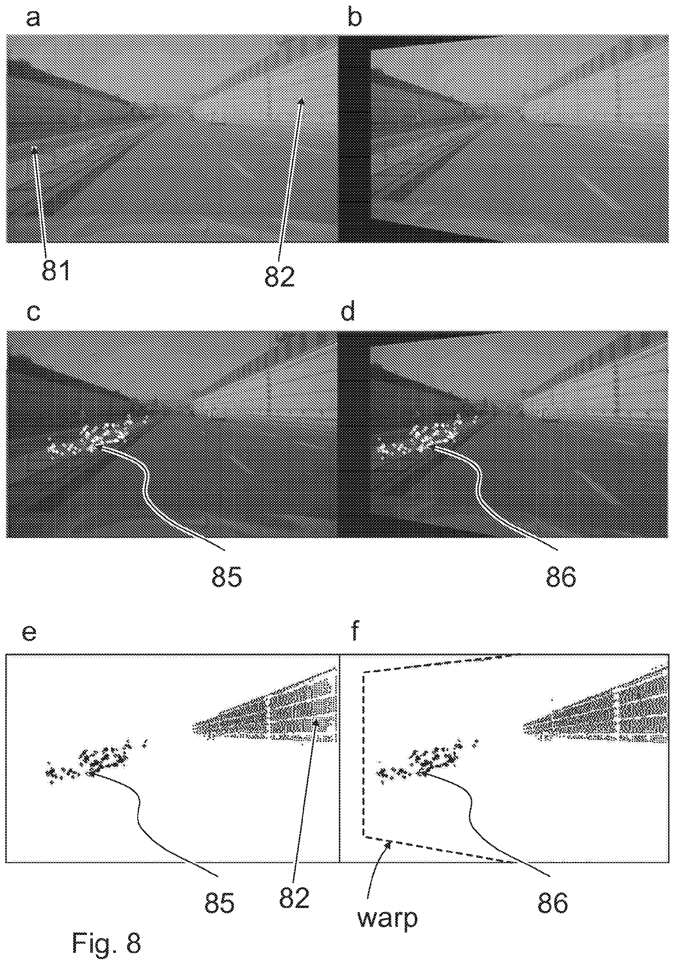

Fig. 8 veranschaulicht ein solches Vorgehen.

Fig. 8a zeigt ein Bild einer anderen Fahrsituation, das von der Fahrzeugkamera zu einem Zeitpunkt t-1 aufgenommen wurde. Zu sehen ist eine Autobahn mit drei Fahrspuren je Fahrtrichtung. Links der eigenen dreispurigen Fahrbahn befindet sich eine Leitplanke (81) als erhabene Begrenzung zur Gegenfahrbahn. Rechts der Fahrbahn befindet sich eine Lärmschutzwand (82).

Fig. 8b zeigt ein Bild, das zum darauffolgenden Zeitpunkt t aufgenommen wurde und über die Homographie der Leitplanke derart transformiert ("gewarpt", englisch: to warp) wurde, dass die infolge der Bewegung des Fahrzeuges und damit der Fahrzeugkamera zwischen den beiden Aufnahmezeitpunkten auftretenden Änderungen im Bild im Bereich der Leitplanke kompensiert werden. Die Vorwärtsbewegung des eigenen Fahrzeugs führt in Fig. 8b dazu, dass der naheliegendste Teilstrich der Fahrspurmarkierung näher am eigenen Fahrzeug ist als in Fig. 8a. Die Transformation führt zu der trapezförmigen Versetzung des Bildes, welche in Fig. 8f durch eine gestrichelte Linie veranschaulicht ist.

Fig. 8c zeigt nun korrespondierende Merkmale (85), die im Bereich der Leitplanke (81, vgl. Fig. 8a) ermittelt wurden, als weiße Punkte.

Fig. 8d zeigt, wo diese korrespondierenden Merkmale im nächsten Bild zu erwarten sind (86), nachdem dieses wie zu Fig. 8b beschrieben transformiert worden ist.

In Fig. 8e und 8f ist dieser Sachverhalt nochmals in einer schwarz-weiß Darstellung gezeigt, wobei die korrespondierenden Merkmale (85) nun den schwarzen Punkten auf der Leitplanke (81) in der linken Bildhälfte entsprechen.

Zur Generierung eines dichten Flussfeldes kann also für jedes Segment das aktuelle Bild auf das vorherige Bild gewarpt werden, um bereits bestehende Korrespondenzen, die sich in ihrer Skale oder Form veränderte haben, wieder zu finden bzw. um neue Korrespondenzen mittels deckungsgleicher Templates zu etablieren.

Sind in einem aktuellen Frame nicht genügend Flussvektoren zur Neuberechnung einer Homographie vorhanden, lassen sich näherungsweise die Homographie aus dem letzten Frame verwenden um die Korrespondenzfindung robuster gegen Form und Skalenänderungen zu gestalten.

Folgende Ausgestaltungsformen bzw. -aspekte sind vorteilhaft und können einzeln oder in Kombination vorgesehen werden:

1. Das Bild wird in NxM Zellen unterteilt und den Punkt-Korrespondenzen einer Zelle wird eine eindeutige Zellen-ID zugewiesen. Aus den Korrespondenzen mit gleichen IDs werden mittels RANSAC die Back-/Ground- und Side-Plane-Homographien (Gleichung 9, 10 und 10) berechnet und sowohl die Homographie mit dem geringsten Rückprojektionsfehler, als auch die zur Berechnung der Homographie verwendeten Stützstellen gespeichert. Bei RANSAC (RAndom SAmple Consensus) Verfahren wird üblicherweise bei jeder Iteration eine minimale Anzahl an zufällig ausgewählten Korrespondenzen verwendet, um eine Hypothese zu bilden. Für jedes korrespondierende Merkmal wird anschließend ein Wert berechnet, der beschreibt, ob das korrespondierende Merkmal die Hypothese unterstützt. Wenn die Hypothese eine hinreichende Unterstützung durch die korrespondierenden Merkmale erreicht, können die nicht-unterstützenden korrespondierende Merkmale als Ausreißer verworfen werden. Andernfalls wird erneut eine minimale Anzahl an Korrespondenzen zufällig ausgewählt.

2. Für benachbarte Zellen $i, j$ werden die Rückprojektionsfehler $\sum x_{t0}^i - H_j x_{t1}^i$ bzw. $\sum x_{t0}^j - H_i x_{t1}^j$ über die Stützstellen der benachbarten Homographie berechnet. Ist der Rückprojektionsfehler $\sum x_{t0}^i - H_j x_{t1}^i$ kleiner $\sum x_{t0}^i - H_i x_{t1}^i$ bzw. unterschreiten die Fehler eine auf die Flusslänge normierte Schwelle, werden die IDs zusammengefasst und die Homographien neu berechnet. Insbesondere können zwei benachbarte Zellen als zur selben Ebene (bzw. zum selben Segment oder zum selben Objekt) zugehörig geclustert werden, wenn der Rück-projektionsfehler $\sum_i (x_{t0}^i - H_j x_{t1}^i)$ kleiner als $\sum_i (x_{t0}^i - H_i x_{t1}^i)$ ist und wenn beide Rückprojektionsfehler $\sum_i (x_{t0}^i - H_j x_{t1}^i)$ und $\sum_i (x_{t0}^i - H_i x_{t1}^i)$ eine auf die Flusslänge normierte Schwelle unterschreiten.

3. Die Rückprojektionsfehler $x_{t0} - H_i x_{t1}$ sämtlicher Punkt-Korrespondenzen werden für die angrenzenden Segmente berechnet und eine Punkt-Korrespondenz wird dem Segment mit geringstem Rückprojektionsfehler zugeordnet. Überschreitet der minimale Fehler eine Schwelle, werden die Korrespondenzen mit einer neuen Objekt ID versehen um auch kleinere bzw. teilverdeckte Objekte erkennen zu können.

4. Die Homographien der zum Zeitpunkt $t-1$ extrahierten Segmente werden zu Beginn eines neuen Frames (t-0) über die bereits gefunden Bild-Korrespondenzen neu berechnet und die bereits bestehenden Segment IDs in den aktuellen Frame prädiziert. Sind im aktuellen Frame nicht genügend Flussvektoren zur Neuberechnung einer Homographie vorhanden, lassen sich näherungsweise die Homographien aus dem letzten Frame verwenden.

5. Zur Generierung eines dichten Flussfeldes wird für jedes Segment der aktuelle Frame (t-0) auf den letzten Frame (t-1) gewarpt, um bereits bestehende Korrespondenzen, die sich in ihrer Skale oder Form veränderte haben, wieder zu finden bzw. um neue Korrespondenzen zu etablieren.

6. Die Rückprojektionsfehler der Back-/Ground- und Side-Plane können zur Validierung erhabener Ziele verwendet werden, siehe Fig. 6.

7. Ist z.B. bei einer Fahrzeugstereokamera eine Disparitätskarte vorhanden, können die absoluten Geschwindigkeiten aus der inversen TTC $t/d$ berechnet werden, da dann die absoluten Entfernungen $d$ für einzelne Pixel in der Disparitätskarte vorliegen.

8. Wird für jedes Segment eine vollständige Homographie mit allen Freiheitsgraden berechnet, kann aus Segmenten mit einer TTC nahe unendlich (bzw. inverse TTCs annähernd Null) die Rotationsmatrix R bestimmt werden.

9. Die 3D-Umgebung kann aus der prädizierten Position ($Hx_{t1}$, $x_{t1}$) anstelle der gemessenen Position ($x_{t0}$, $x_{t1}$) rekonstruiert werden und erlaubt es, auch Objekte am Epipol zu rekonstruieren.

**Patentansprüche**

1.  Verfahren zur Detektion von Objekten umfassend die Schritte:

a) Aufnahme einer Folge von Bildern mittels einer monokularen Fahrzeugkamera,

b1) Bestimmung von korrespondierenden Merkmalen in mindestens zwei aufeinander folgenden Bildern der Bilderfolge,

b2) Ermittlung von Ebenen im Raum, wobei die Ebenen anhand einer Zuordnung von benachbarten, korrespondierenden Merkmalen zu jeweils einer Ebene mit einer der folgenden vorgegebenen Orientierungen erfolgt: einer Rückwandebene normal zur Fahrzeuglängsrichtung, einer Seitenwandebene normal zur lateralen Richtung oder einer Bodenebene normal zur vertikalen Richtung,

**c) Berechnung von Homographien für benachbarte korrespondierende Merkmale zur Bestimmung der Mehrzahl von Ebenen und zur Zuordnung der benachbarten, korrespondierenden Merkmale zu der Mehrzahl von Ebenen,** d) Ermittlung einer Bewegung der ermittelten Ebenen im Raum, wobei $t/d = ( t_x, t_y, t_z )$ als Bewegungsmaß für die ermittelten Ebenen ermittelt wird, wobei $t$ die Translation der Fahrzeugkamera und d die Entfernung zu dieser Ebene beschreibt, und

e) Erkennung dynamischer Objekte anhand des ermittelten Bewegungsmaßes mindestens einer ermittelten Rückwand- oder Seitenwand-Ebene, die einem Objekt zugeordnet werden kann.

2. Verfahren nach Anspruch 1, wobei ein Koordinatensystem verwendet wird, bei dem die x-Richtung lateral, die y-Richtung vertikal und die z-Richtung in Fahrzeuglängsrichtung verläuft.

3. Verfahren nach einem der vorhergehenden Ansprüche, wobei aus einer ermittelten Rückwandebene und/oder einer Seitenwandebene eine Objekthypothese für ein erhabenes Objekt generiert wird.

4. Verfahren nach einem der vorhergehenden Ansprüche, wobei eine Eigenrotation der Fahrzeugkamera zwischen mindestens zwei aufeinander folgenden Bildern ermittelt wird anhand der Ermittlung von einer oder mehrerer statischer Ebenen, die keine Translationsbewegung aufweisen.

5. Verfahren nach Anspruch 4, wobei die Bildkoordinaten des Epipols $x_{e,t0}$ zum Zeitpunkt t durch die Homographie statischer Ebenen $H_{st}$ der Bildkoordinaten des Epipols $x_{e,t1}$ zum Zeitpunkt t-1 prädiziert werden: $x_{e,t0} = H_{st} * x_{e,t1}$

6. Verfahren nach Anspruch 5, wobei die Pitchrate der Fahrzeugkamera bestimmt wird als $atan((x_{e0} - x_{e1})/f)$ mit der auf einen Pixel bezogenen Brennweite $f$.

7. Verfahren nach Anspruch 5 oder 6, wobei die Gierrate der Fahrzeugkamera bestimmt wird als $atan((y_{e0} - y_{e1})/f)$ mit der auf einen Pixel bezogenen Brennweite $f$.

8. Verfahren nach einen der vorhergehenden Ansprüche, wobei eine Eigenrotation der Fahrzeugkamera bestimmt wird aus Daten oder unter Berücksichtigung von Daten eines Sensorclusters des Fahrzeugs.

9. Verfahren nach einem der Ansprüche 4 bis 8, wobei nach einer Kompensation der Eigenrotation der Fahrzeugkamera überholende Fahrzeuge aufgrund ihrer negativen $t_z$ Komponente der Bewegung der entsprechenden Ebene erkannt werden

10. Verfahren nach einem der Ansprüche 4 bis 9, wobei nach einer Kompensation der Eigenrotation der Fahrzeugkamera näher kommende Objekte anhand der positiven $t_z$ Komponente der Bewegung der entsprechenden Ebene als potentielle Kollisionsobjekte erkannt werden.

11. Verfahren nach einem der Ansprüche 4 bis 10, wobei nach Kompensation der Eigenrotation der Fahrzeugkamera in einer Kurve fahrende Fahrzeuge durch eine laterale $t_x$ -Komponente der Bewegung der entsprechenden Ebene ungleich Null erkannt werden.

12. Verfahren nach einem der vorhergehenden Ansprüche, wobei ein Objekt, bei dem eine Bewegung der entsprechenden Ebene festgestellt wurde, in der Folge mit dem Label "bewegliches Objekt" getrackt wird.

13. Verfahren nach einem der vorhergehenden Ansprüche, wobei ein geometrisches Tracking eines Objekts durchgeführt wird, indem eine feste Breite, Höhe und/oder Länge des Objekts im Raum angenommen wird.

14. Vorrichtung zur Detektion von Objekten aus einer Folge von Bildern einer monokularen Fahrzeugkamera umfassend ein Kamerasteuergerät und eine Auswerteelektronik,

wobei das Kamerasteuergerät dazu ausgebildet ist,

a) eine Folge von Bildern mit der monokularen Fahrzeugkamera aufzunehmen; und

wobei die Auswerteelektronik dazu ausgebildet ist,

b1) korrespondierende Merkmalen in mindestens zwei aufeinander folgenden Bildern der Bilderfolge zu bestimmen, b2) Ebenen im Raum zu ermitteln, wobei die Ebenen anhand einer Zuordnung von benachbarten, korrespondierenden Merkmalen zu jeweils einer Ebene mit einer der folgenden vorgegebenen Orientierungen erfolgt: einer Rückwandebene normal zur Fahrzeuglängsrichtung, einer Seitenwandebene normal zur lateralen Richtung oder einer Bodenebene normal zur vertikalen Richtung,

c) Berechnung von Homographien für benachbarte korrespondierende Merkmale zur Bestimmung der Mehrzahl von Ebenen und zur Zuordnung der benachbarten, korrespondierenden Merkmale zu der Mehrzahl von Ebenen,

d) eine Bewegung der ermittelten Ebenen im Raum zu ermitteln, wobei als Bewegungsmaß $t/d = ( t_x, t_y, t_z )$ für die ermittelten Ebenen ermittelt wird, wobei $t$ die Translation der Fahrzeugkamera und d die Entfernung zu dieser Ebene beschreibt, und

e) dynamische Objekte anhand des ermittelten Bewegungsmaßes mindestens einer ermittelten Rückwand- oder Seitenwand-Ebene zu erkennen, die einem Objekt zugeordnet werden kann.

## Claims

1. Method for detecting objects, comprising the following steps:

   a) recording a sequence of images by means of a monocular vehicle camera,

   b1) determining corresponding features in at least two successive images of the image sequence,

   b2) ascertaining planes in space, wherein the planes are established on the basis of an assignment of adjacent, corresponding features to a respective plane with one of the following predefined orientations: a back plane normal to the longitudinal direction of the vehicle, a side plane normal to the lateral direction or a ground plane normal to the vertical direction,

   c) calculating homographies for adjacent corresponding features for the purpose of determining the plurality of planes and for the purpose of assigning the adjacent, corresponding features to the plurality of planes, d) ascertaining a motion of the ascertained planes in space, wherein $t/d = ( t_x, t_y, t_z )$ is ascertained as a measure of motion for the ascertained planes, wherein t describes the translation of the vehicle camera and d describes the distance from this plane, and

   e) recognizing dynamic objects on the basis of the ascertained measure of motion of at least one ascertained back or side plane which can be assigned to an object.

2. Method according to Claim 1, wherein a coordinate system is used in which the x-direction runs laterally, the y-direction runs vertically and the z-direction runs in the longitudinal direction of the vehicle.

3. Method according to either of the preceding claims, wherein an object hypothesis for a raised object is generated from an ascertained back plane and/or a side plane.

4. Method according to any of the preceding claims, wherein an own rotation of the vehicle camera between at least two successive images is ascertained on the basis of ascertaining one or more static planes which have no translational motion.

5. Method according to Claim 4, wherein the image coordinates of the epipole $x_{e,t0}$ at the time t are predicted by the homography of static planes $H_{st}$ of the image coordinates of the epipole $x_{e,t1}$ at the time t-1: $x_{e,t0} = H_{st} * x_{e,t1}$

6. Method according to Claim 5, wherein the pitch rate of the vehicle camera is determined as $atan((x_{e0} - x_{e1})/f)$ with the focal length $f$ with respect to one pixel.

7. Method according to Claim 5 or 6, wherein the yaw rate of the vehicle camera is determined as $atan((y_{e0} - y_{e1})/f)$ with the focal length $f$ with respect to one pixel.

8. Method according to any of the preceding claims, wherein an own rotation of the vehicle camera is determined from data or taking account of data of a sensor cluster of the vehicle.

9. Method according to any of Claims 4 to 8, wherein, after compensation of the own rotation of the vehicle camera, overtaking vehicles are recognized on account of their negative $t_z$ component of the motion of the corresponding plane.

10. Method according to any of Claims 4 to 9, wherein, after compensation of the own rotation of the vehicle camera, approaching objects are recognized as potential collision objects on account of the positive $t_z$ component of the motion of the corresponding plane.

11. Method according to any of Claims 4 to 10, wherein, after compensation of the own rotation of the vehicle camera, cornering vehicles are recognized by virtue of a lateral $t_x$ component of the motion of the corresponding plane that is not equal to zero.

12. Method according to any of the preceding claims, wherein an object for which a motion of the corresponding plane has been established is subsequently tracked using the label "mobile object".

13. Method according to any of the preceding claims, wherein geometric tracking of an object is carried out by assuming a fixed width, height and/or length of the object in space.

14. Device for detecting objects from a sequence of images from a monocular vehicle camera comprising a camera controller and evaluation electronics, wherein the camera controller is designed

a) to record a sequence of images using the monocular vehicle camera; and wherein the evaluation electronics are designed
b1) to determine corresponding features in at least two successive images of the image sequence,
b2) to ascertain planes in space, wherein the planes are established on the basis of an assignment of adjacent, corresponding features to a respective plane with one of the following predefined orientations: a back plane normal to the longitudinal direction of the vehicle, a side plane normal to the lateral direction or a ground plane normal to the vertical direction,
c) to calculate homographies for adjacent corresponding features for the purpose of determining the plurality of planes and for the purpose of assigning the adjacent, corresponding features to the plurality of planes,
d) to ascertain a motion of the ascertained planes in space, wherein $tld = ( t_x, t_y, t_z )$ is ascertained as a measure of motion for the ascertained planes, wherein t describes the translation of the vehicle camera and d describes the distance from this plane, and
e) to recognize dynamic objects on the basis of the ascertained measure of motion of at least one ascertained back or side plane which can be assigned to an object.

**Revendications**

1. Procédé de détection d'objets, comprenant les étapes consistant à :

a) acquérir une suite d'images avec la caméra de véhicule monoculaire,
b1) déterminer des caractéristiques correspondantes dans au moins deux images successives de la suite d'images,
b2) déterminer des plans dans l'espace, les plans étant déterminés sur la base d'une mise en relation de caractéristiques correspondantes adjacentes à un plan respectif ayant l'une des orientations prédéfinies suivantes : un plan de paroi arrière normal à la direction longitudinale du véhicule, un plan de paroi latérale normal à la direction latérale ou un plan de sol normal à la direction verticale,
c) calculer des homographies pour des caractéristiques correspondantes adjacentes afin de déterminer la pluralité de plans et de mettre en relation des caractéristiques correspondantes adjacentes avec la pluralité de plans, d) déterminer un mouvement des plans déterminés dans l'espace, en déterminant en tant que mesure de mouvement $tld = ( t_x, t_y, t_z )$ pour les plans déterminés, où $t$ décrit la translation de la caméra de véhicule et d la distance à ce plan, et
e) reconnaître des objets dynamiques sur la base de la mesure de mouvement déterminée d'au moins un plan de paroi arrière ou de paroi latérale déterminé, qui peut être associé à un objet.

2. Procédé selon la revendication 1, dans lequel on utilise un système de coordonnées dans lequel la direction x s'étend latéralement, la direction y s'étend verticalement et la direction z s'étend dans la direction longitudinale du véhicule.

3. Procédé selon l'une quelconque des revendications précédentes, dans lequel une hypothèse d'objet est générée pour un objet en relief par rapport à un plan de paroi arrière et/ou à un plan de paroi latérale déterminé.

4. Procédé selon l'une quelconque des revendications précédentes, dans lequel une rotation propre de la caméra de véhicule entre au moins deux images successives est déterminée sur la base de la détermination d'un ou de plusieurs plans statiques qui ne présentent aucun mouvement de translation.

5. Procédé selon la revendication 4, dans lequel les coordonnées d'image de l'épipôle $x_{e,t0}$ à l'instant t sont prédites par l'homographie de plans statiques $H_{st}$ des coordonnées d'image de l'épipôle $x_{e,t1}$ à l'instant t-1 : $x_{e,t0} = H_{st} * x_{e,t1}$

6. Procédé selon la revendication 5, dans lequel le taux de tangage de la caméra de véhicule est déterminé sous la forme $atan((x_{e0} - x_{e1})/f)$ où f est la distance focale rapportée à un pixel.

7. Procédé selon la revendication 5 ou 6, dans lequel le taux de lacet de la caméra de véhicule est déterminé sous la forme $atan((y_{e0} - y_{e1})/f)$ où f est la distance focale rapportée à un pixel.

8. Procédé selon l'une quelconque des revendications précédentes, dans lequel une rotation propre de la caméra de véhicule est déterminée à partir de données ou en tenant compte de données d'un groupe de capteurs du véhicule.

9. Procédé selon l'une quelconque des revendications 4 à 8, dans lequel, après une compensation de la rotation propre de la caméra de véhicule, les véhicules en dépassement sont détectés sur la base de leur composante $t_z$ négative du mouvement du plan correspondant.

10. Procédé selon l'une quelconque des revendications 4 à 9, dans lequel, après une compensation de la rotation propre de la caméra de véhicule, des objets qui se rapprochent sont reconnus en tant qu'objets de collision potentiels sur la base de la composante $t_z$ positive du mouvement du plan correspondant.

11. Procédé selon l'une quelconque des revendications 4 à 10, dans lequel, après la compensation de la rotation propre de la caméra de véhicule, des véhicules se effectuant un virage sont reconnus par une composante latérale $t_x$ du mouvement du plan correspondant qui est différente de zéro.

12. Procédé selon l'une quelconque des revendications précédentes, dans lequel un objet pour lequel un mouvement du plan correspondant a été établi est ensuite poursuivi avec l'étiquette "objet en mouvement".

13. Procédé selon l'une quelconque des revendications précédentes, dans lequel une poursuite géométrique d'un objet est effectuée en supposant une largeur, une hauteur et/ou une longueur fixes de l'objet dans l'espace.

14. Dispositif de détection d'objets à partir d'une suite d'images d'une caméra de véhicule monoculaire comprenant un appareil de commande de caméra et une électronique d'évaluation,

   dans lequel l'appareil de commande de caméra est conçu pour
   a) acquérir une suite d'images avec la caméra de véhicule monoculaire ; et
   dans lequel l'électronique d'évaluation est conçue pour
   b1) déterminer des caractéristiques correspondantes dans au moins deux images successives de la suite d'images,
   b2) déterminer des plans dans l'espace, les plans étant déterminés sur la base d'une mise en relation de caractéristiques correspondantes adjacentes à un plan respectif ayant l'une des orientations prédéfinies suivantes : un plan de paroi arrière normal à la direction longitudinale du véhicule, un plan de paroi latérale normal à la direction latérale ou un plan de sol normal à la direction verticale,
   c) calculer des homographies pour des caractéristiques correspondantes adjacentes afin de déterminer la pluralité de plans et de mettre en relation les caractéristiques correspondantes adjacentes avec la pluralité de plans,
   d) déterminer un mouvement des plans déterminés dans l'espace, en déterminant en tant que mesure de mouvement $t/d = (t_x, t_y, t_z)$ pour les plans déterminés, où $t$ décrit la translation de la caméra de véhicule et d la distance à ce plan, et
   e) reconnaître des objets dynamiques sur la base de la mesure de mouvement déterminée d'au moins un plan de paroi arrière ou de paroi latérale déterminé, qui peut être associé à un objet.

21

20    d1

Fig. 1

30

d2

32

Fig. 2

a

b

21

20          d1

23          20          d3

Fig. 3

A    B    C    D    ...

1
2
3
⋮

Fig. 4

17

Fig. 5

a

b

c

d

Fig. 6

Fig. 7

a

b

81

82

c

d

85

86

e

f

85

82

warp

86

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140161323 A1
- EP 2993654 A1
- US 2015086080 A1

**In der Beschreibung aufgeführte Nicht-Patentliteratur**

- Stereo-Based Vision System for Automotive Imminent Collision Detection. **P. CHANG et al.** Intelligent Vehicles Symposium, 2004 IEEE Parma, Italy June 14-17, Piscataway NJ, USA. IEEE, 14. Juni 2004, 274-279
- **P. SINGHAL et al.** Top Down Approach to Detect Multiple Planes in Images. *Proceedings of the 2014 Indian Conference on Computer Vision Graphics and Image Processing, ICVGIP '14,* 1-8
- **J. PRANKL et al.** Interactive object modelling based on piecewise planar surface patches. *Computer Vision and Image Understanding,* 2013, vol. 117 (6), 718-731
- **HARTLEY, R. ; ZISSERMAN, A.** *Tutorial: Multiple View Geometry,* 26. September 2016, https://de.scribd.com/document/96810936/Hartley-Tut-4up